# EUROPEAN PATENT APPLICATION

(11) **EP 4 562 987 A2**
(43) Date of publication of application: **04.06.2025**
(21) Application number: 24204346.1
(22) Date of filing: 02.10.2024
(51) Int. Cl.: A01B 69/00, A01B 69/04, G01S 13/86, G06V 10/82

(54) **AGRICULTURAL VEHICLES INCLUDING AN IMAGING CONTROLLER, AND RELATED METHODS**

(30) Priority: 29.11.2023 GB 202318249
(71) Applicant: AGCO International GmbH, 8212 Neuhausen am Rheinfall (CH)
(72) Inventor: CHRISTIANSEN, Martin Peter, 8930 Randers (DK); MUJKIC, Esma, 8930 Randers (DK); BAYLIFF, Michael, Hesston, 67062 (US); SLEZAK, Filip, 8930 Randers (DK)
(74) Representative: AGCO Intellectual Property Department

(57) **Abstract**

An agricultural vehicle includes cameras and radars operably coupled to the agricultural vehicle, and an imaging controller operably coupled to the radars and the cameras. The imaging controller includes at least one processor, and instructions that cause the processor to receive image data from the cameras, receive radar data from the radars, combine the image data from a first camera with the image data from a second camera having a different field of view than the first camera to generate combined image data, and fuse the combined image data with the radar data to generate fused data. Related agricultural vehicles and methods are also disclosed.

## Description

### CROSS-REFERENCE TO RELATED APPLICATION

N/A

### FIELD

Embodiments of the present disclosure relate generally to agricultural vehicles including at least one camera, at least one radar, and an imaging controller configured to determine (e.g., image) surroundings of the agricultural vehicle in an agricultural environment to facilitate one or more control operations of the agricultural vehicle, and to related systems and methods.

### BACKGROUND

Agricultural operations, such as planting, tilling, or spraying, are conventionally performed in a field. The field may include obstacles, such as bumps, rocks, animals, humans, windmills, poles, etc. that should be avoided by the agricultural vehicle performing the agricultural operation. However, an operator of the agricultural vehicle may not see the obstacle or may see the obstacle but may not be able to control the agricultural vehicle in time to avoid hitting the obstacle. The environment in which the agricultural operations are performed may include many unknowns (e.g., wild animals, farm animals, grazing animals, boulders, other agricultural machines and vehicles (e.g., trailers, tractors, combines, planters, implements) that are not typically found on traveled roadways (e.g., paved roads, streets, highways, freeways) and that may act and move differently than objects found on travelled roadways. In addition, in the agricultural environment, many objects may be obstructed from the field of view of the operator. For example, objects may be hidden in rows of crops, behind bushes or tress, or in fields of hay or grass. The disparate objects and animals that may be found in an agricultural environment impart unpredictability of make operation of agricultural vehicles particularly difficult.

### BRIEF SUMMARY

According to some embodiments, an agricultural vehicle includes cameras operably coupled to the agricultural vehicle, radars operably coupled to the agricultural vehicle, and an imaging controller operably coupled to the radars and the cameras. The imaging controller includes at least one processor, and at least one non-transitory computer-readable storage medium having instructions thereon that, when executed by the at least one processor, cause the imaging controller to receive image data from the cameras, receive radar data from the radars, combine the image data from a first camera with the image data from a second camera having a different field of view than the first camera to generate combined image data, and fuse the combined image data with the radar data to generate fused data.

The imaging controller may include additional instructions thereon that, when executed by the at least one processor, cause the imaging controller to perform object detection on the combined image data before fusing the combined image data with the radar data.

The additional instructions may, when executed by the at least one processor, cause the imaging controller to identify instances of objects in the fused data.

In some embodiments, the imaging controller includes instructions thereon that, when executed by the at least one processor, cause the imaging controller to display an image of the fused data on a user interface.

The instructions may, when executed by the at least one processor, cause the imaging controller to fuse the combined image data with the radar data by projecting the radar data to the combined image data. In other embodiments, the imaging controller includes instructions thereon that, when executed by the at least one processor, cause the imaging controller to fuse the combined image data with the radar data by projecting the combined image data onto the radar data.

In some embodiments, the imaging controller includes instructions thereon that, when executed by the at least one processor, cause the imaging controller to label objects in the fused data, and provide the fused data including the labeled objects to a remote location.

The imaging controller may include instructions thereon that, when executed by the at least one processor, cause the imaging controller to control a navigation operation of the agricultural vehicle.

In some embodiments, the imaging controller includes instructions thereon that, when executed by the at least one processor, cause the imaging controller to use a neural network to receive the combined image data and label objects in the combined image data based on an agricultural dataset including ground truths for agricultural objects.

The imaging controller may include instructions thereon that, when executed by the at least one processor, cause the imaging controller generate the combined image data having a same field of view as one of the radars.

The imaging controller may include instructions thereon that, when executed by the at least one processor, cause the imaging controller to generate the combined image data having a 360° field of view.

The agricultural vehicle may further include at least one of a global navigation satellite system and an inertial measurement unit operably coupled to the agricultural vehicle.

In some embodiments, an agricultural vehicle includes a propulsion system, wheels operably coupled to a chassis, cameras operably coupled to the agricultural vehicle, and an imaging controller operably coupled to the cameras. The imaging controller includes at least one processor, at least one non-transitory computer-readable storage medium having instructions thereon that, when executed by the at least one processor, cause the imaging controller to receive image data from the cameras, generate combined image data including the image data from each camera, the combined image data having a field of view of 360°, and classify objects in the combined image data using a neural network trained to identify agricultural objects.

The agricultural vehicle may further include radars operably coupled to the agricultural vehicle.

The imaging controller may include instructions thereon that, when executed by the at least one processor, cause the imaging controller to receive 3D radar point cloud data from the radars, fuse the 3D radar point cloud data with the combined image data to generate fused data, and perform an instance segmentation operation on the fused data.

The imaging controller may include instructions thereon that, when executed by the at least one processor, cause the imaging controller to perform at least one navigation operation based on the fused data.

In some embodiments, a method of operating an agricultural vehicle includes receiving image data from cameras operably coupled to the agricultural vehicle, receiving radar data from radars operably coupled to the agricultural vehicle, combining image data from two or more cameras to create combined image data having a field of view corresponding to a field of view of at least one of the radars, fusing the radar data with the combined image data to form fused data, and controlling one or more operations of the agricultural vehicle based on the fused data.

The method may further include segmenting the fused data and identifying instances of agricultural objects in the fused data.

The method may also include classifying objects in the combined image data using a neural network trained with a dataset including ground truths for agricultural objects.

In some embodiments, the method further includes interpolating one of the image data and the radar data to correspond in time to the other of the image data and the radar data.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified perspective view of an agricultural vehicle including an imaging controller, in accordance with one or more embodiments of the disclosure;
FIG. 2 is a simplified schematic of the imaging controller 120, in accordance with embodiments of the disclosure;
FIG. 3 is a simplified schematic of an imaging controller 300, in accordance with embodiments of the disclosure;
FIG. 4 is a simplified flow chart illustrating a method of navigating a vehicle, according to one or more embodiments of the disclosure; and
FIG. 5 is a schematic of a computer-readable storage medium including processor-executable instructions configured to embody one or more of the methods of operating an agricultural vehicle.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

According to embodiments described herein, an agricultural vehicle (also referred to as a "vehicle") an imaging controller that is configured to detect agricultural objects (e.g., wildlife, other agricultural vehicles, obstacles in the field) in an agricultural field during one or more agricultural operations. The vehicle is configured to perform the agricultural operations safely without inadvertent contact between the vehicle and the detected objects. The vehicle may include one or more cameras and one or more radars operably coupled thereto and configured to generate image data and radar data, respectively. The vehicle may include a computing system including the imaging controller configured to receive the image data and fuse the image data and the radar data to detect the agricultural objects in the agricultural field. The computing system may be configured to perform one or more control operations based on the fused data and/or provide instructions to a navigation controller or another controller of the vehicle 100 to control one or more operations (e.g., acceleration, velocity, braking, steering) of the vehicle.

The imaging controller may include a camera processing manager configured to receive the image data from the one or more cameras. The camera processing manager may be configured to perform one or more object detection operations on the image data to identify and label (e.g., classify) objects in the image data to generate labeled image data. In some embodiments, the camera processing manager is configured to perform an object tracking operation on the detected objects in the labeled image data, each tracked object defined by pixels having image data (e.g., color data, SWIR data, NIR data). The object detection may be performed based on using a neural network (e.g., an object detection neural network) specifically trained for identifying one or more agricultural objects. The labeled image data may be fused with the radar data (e.g., a 3D radar point cloud) using one or more sensor fusion algorithms of a fusion manager to form fused data. In some embodiments, the imaging controller is configured to perform an image segmentation (e.g., instance segmentation) operation on the fused data, such as using one or more neural networks (e.g., an object segmentation neural network) trained for identifying one or more agricultural objects in fused data including image data and radar data, pixels of the fused data including the image data, velocity, distance, azimuth angle, and elevational angle. In some embodiments, the neural network includes associations between different types of agricultural objects (e.g., a tractor and a trailer, a towed implement and a tractor, etc.). The imaging controller may be configured to analyze the fused data and the computing system may be configured to perform one or more control operations based on the fused data. For example, the control system may be configured to provide instructions to a steering system, a navigation system, a braking system, and/or a propulsion system, to control operation of the vehicle. In some embodiments, the control system performs a collision avoidance operation based on the fused data. The imaging system may facilitate operation of the vehicle without undesirably colliding into agricultural objects that may be present in the agricultural field. In some embodiments, the imaging system facilitates avoidance of objects in the agricultural field that may not be seen by the operator, but are detected by the imaging controller.

Obtaining the image data with cameras and the radar data with the radars facilitates more precise object detection and tracking than use of only image data or radar data. For example, the image data may facilitate object identification and classification while the radar data may facilitate object location and velocity detection. In addition, the radar data may provide distance and velocity data of the objects even in adverse weather conditions. The radar data may be provided as a 3D radar point cloud or analyzed to generate a 3D radar point cloud, including spatial information that may not be included in the image data. The combination of the image data and the radar data, in combination with one or more neural networks trained to identify agricultural objects may facilitate safe operation of the vehicle during agricultural operations. For example, the vehicle may be operated without colliding into agricultural objects since the agricultural objects are detected with the imaging controller and avoided by the vehicle (e.g., by performing one or more navigation controls) and/or presented to the operator so that the operator may avoid the detected agricultural objects.

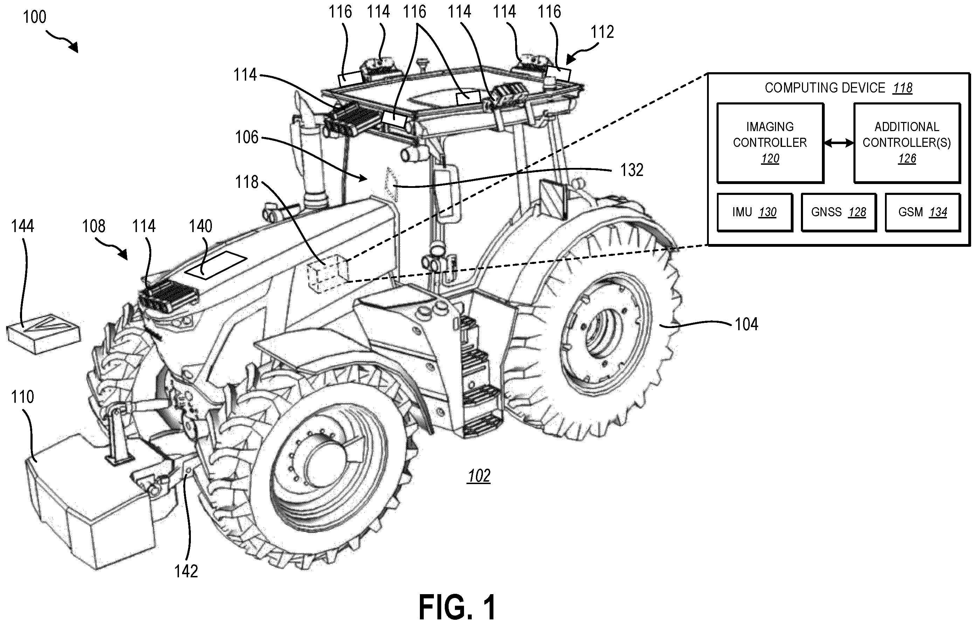

FIG. 1 is a simplified perspective view of an agricultural vehicle 100 (simply referred to herein as a "vehicle") including an imaging controller 120 as part of a computing device 118, in accordance with one or more embodiments of the disclosure. In some embodiments, the vehicle 100 includes a tractor. However, the vehicle 100 may include agricultural vehicles other than and/or in addition to a tractor, such as, for example, a combine, a planter, a tiller, a sprayer, a harvester, a swather, a mower, a spreader, or another agricultural vehicle. The vehicle 100 may be configured to drive over a ground 102, such as a field. As described in further detail herein, the field may include agricultural objects, such as one or more of crops, weeds, trees, rocks, agricultural equipment, animals (e.g., livestock), humans, or other objects and/or animals that may be found in an agricultural environment. The vehicle 100 includes tires 104 configured for facilitating traversal of the vehicle 100 over the ground 102.

The vehicle 100 includes an operator cabin 106 from which an operator of the vehicle 100 may control the vehicle 100, and an engine compartment 108 housing an engine or other propulsion system for providing a motive force for moving the vehicle 100. In some embodiments, the propulsion system includes motors operably coupled to wheels of the vehicle 100. The vehicle 100 includes a steering system (e.g., a steering wheel and associated steering column, universal joint, and rack-and-pinion) configured for facilitating steering and navigation of the vehicle 100. The vehicle 100 may include one or more additional structures or assemblies, such as a header 110, configured for performing one or more agricultural operations (e.g., towing an agricultural implement (e.g., a spreader, row units of a planter), a trailer, etc.

The vehicle 100 may include a vision system 112 including one or more cameras 114 operably coupled to the vehicle 100 and one or more radars 116 operably coupled to the vehicle 100. The vision system 112 may be configured to facilitate imaging an environment around the vehicle 100, such as during use and operation thereof. In some embodiments, the vision system 112 includes one camera 114 and one radar 116. In some embodiments, a field of view (FOV) of the camera 114 is substantially the same (e.g., overlaps) a FOV of the radar 116.

In other embodiments, the vision system 112 includes a plurality of cameras 114 and a plurality of radars 116. In some embodiments, a FOV of at least one camera 114 may not overlap a FOV of at least one of the radars 116. In some embodiments, the vision system 112 includes a different number of cameras 114 than a number of radars 116. In some embodiments, the vision system 112 includes more cameras 114 than radars 116. In some embodiments, the vision system 112 includes five cameras 114 and four radars 116, the cameras 114 and the radars 116 are configured to provide a 3D surround stereo view of the surroundings of the vehicle 100.

The camera 114 and the radar 116 may directly neighbor one another. For example, in some embodiments, the camera 114 is located at substantially a same elevation (e.g., height) as the radar 116, but is laterally spaced therefrom. In other embodiments, the camera 114 is horizontally aligned (e.g., left and right) with the radar 116, but is vertically displaced therefrom (e.g., located above or below the radar 116).

The camera 114 may be configured to capture image data. The image data may be grayscale image data, color image data (e.g., in the RGB color space), or multispectral image data. The camera 114 may include one or more of a 2D-camera, a stereo camera, a time-of-flight (ToF) camera configured to capture 2D and/or 3D image data. In some embodiments, a ToF camera may facilitate determining depth information and improve an accuracy of image data and object pose determination based on the image data received by the camera 114.

In some embodiments, the camera 114 is configured to capture 3D image data and may include, for example, a stereo camera. In other embodiments, the camera 114 is configured to capture 2D image data. The camera 114 may include one or more of a red, green, blue (RGB) camera, a RGB-IR camera (configured to provide visible images and thermal (e.g., IR) images), a 3D laser scanner (LiDAR), a 2D laser scanner (LiDAR), a charge-coupled device (CCD) camera, a complementary metal oxide semiconductor (CMOS) image sensor, a stereoscopic camera, a monoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. In some embodiments, the camera 114 includes an RGB camera. In some embodiments, the camera 114 is configured to capture image data through smoke, fog, snow, and rain and may include a SWIR camera. In some embodiments, the camera 114 includes an RGB-SWIR line scan camera (a 4-sensor RGB SWIR line scan camera). In other embodiments, the camera 114 is configured to capture RGB image data, SWIR data, long-wave IR (LWIR) data, and/or near-infrared (NIR) data.

The camera 114 may be configured to capture image data at a frame rate within a range of from about 10 Hz to about 30 Hz. In some embodiments, the frame rate of each camera 114 is substantially the same. However, the disclosure is not so limited, and the frame rate of the camera 114 may be different than that described.

A FOV of each of the cameras 114 may be within a range of from about 60° to about 360°, such as from about 60° to about 90°, from about 90° to about 120°, from about 120° to about 180°, or from about 180° to about 360°. However, the disclosure is not so limited, and the FOV of each of the cameras 114 may be different than those described. In some embodiments, the FOV of each camera 114 is substantially the same as the FOV of the other cameras 114.

The radar 116 may include a transmitter configured to transmit a high-frequency signal; an antenna configured to broadcast the high-frequency signal; and a receiver configured to receive the high-frequency signal reflected from one or more objects in the environment. The radar 116 may further include a signal processor configured to determine one or more properties of object(s) from which the high-frequency signal was reflected. The radar 116 may be configured to scan and receive radar data at a rate within a range of from about 10 Hz to about 50 Hz. However, the disclosure is not so limited, and the scan rate of the radar 116 may be different than that described. In some embodiments, the scan rate of the radar 116 may be different than the frame rate of the camera 114.

A FOV of each of the radars 116 may be within a range of from about 60° to about 360°, such as from about 60° to about 90°, from about 90° to about 120°, from about 120° to about 180°, or from about 180° to about 360°. However, the disclosure is not so limited, and the FOV of each of the radars 116 may be different than those described. In some embodiments, the FOV of each radar 116 is substantially the same as the FOV of the other radars 116.

The radar 116 may include a synthetic aperture radar (SAR) or an inverse synthetic aperture radar (ISAR) configured to facilitate receiving relatively higher resolution data compared to conventional radars. The radar 116 may be configured to scan the radar signal across a range of angles to capture a 2D representation of the environment, each pixel representing the radar reflectivity at a specific distance and angle. In other embodiments, the radar 116 includes a 3D radar configured to provide range (e.g., distance, depth), velocity (also referred to as "Doppler velocity"), azimuth angle, and elevational angle. The radar 116 may be configured to provide a 3D radar point cloud to the imaging controller 120.

The radar data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output radar data includes a 3D radar point cloud.

Each of the image data and the radar data may be of the environment around the vehicle 100. For example, the image data and the radar data may be of one or more of the ground 102, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be proximate the vehicle 100 in an agricultural environment.

The vehicle 100 may include the computing device 118 (also referred to as an "electronic control unit" (ECU), a "system controller," or a "computing unit") configured to facilitate one or more control operations (e.g., safety operations, object detection, object avoidance, and remote planning operations) of the vehicle 100 and/or agricultural operation. As described with reference to FIG. 1, the computing device 118 may include the imaging controller 120, and one or more additional controllers 126. The imaging controller 120 may also be referred to herein as a "safety system" or a "safety controller."

While the computing device 118 is illustrated as proximate the engine compartment 108, such as between the engine compartment 108 and the operator cabin 106, in FIG. 1, the disclosure is not so limited. The computing device 118 may be operably coupled to the vehicle 100 at other locations. In some embodiments, the computing device 118 is located inside the operator cabin 106, such as proximate an I/O device 132. In some embodiments, the computing device 118 is located on a device separate from the vehicle 100 (but located within the vehicle 100, such as in the operator cabin 106), such as one a tablet, laptop, or other device.

The vehicle 100 may further include a global navigation satellite system (GNSS) 128, an inertial measurement unit (IMU) 130, an input/output (I/O) device 132, and a global system for mobile communication (GSM) 134. In some embodiments, the I/O device 132 includes a user interface. While the GNSS 128, the IMU 130, and the GSM 134 are illustrated as part of the computing device 118, in other embodiments, one or more of the GNSS 128, the IMU 130, the I/O device 132, and the GSM 134 are not part of the computing device 118 and are in operable communication with the computing device 118. For example, the IMU 130 may be operably coupled to a chassis 142 of the vehicle 100, and one or both of the GNSS 128 and the GSM 134 may be operably coupled to the vehicle 100 external to the computing device 118.

The imaging controller 120 may be in operable communication with the one or more additional controllers 126 configured to perform one or more control operations of the vehicle 100, such as one or more navigation controls (e.g., control of steering, acceleration, velocity, braking, and/or navigation of the vehicle 100). The imaging controller 120 may be configured to facilitate one or more safe operations of the vehicle 100. For example, the imaging controller 120 may be configured to facilitate object avoidance of objects identified based on data from the one or more cameras 114 and the one or more radars 116, to perform autonomous vehicle operation, to perform a leader-follower operation, to provide a display of the surroundings of the vehicle 100 to the I/O device 132, and to provide analyzed image and radar data (e.g., fused data) to a remote location for remote planning, for example.

The imaging controller 120 may be in operable communication with the cameras 114 and the radars 116, such as by wired or wireless communication. The imaging controller 120 may be configured to receive video and/or image data (collectively referred to herein as "image data") from the cameras 114 and facilitate object detection of objects in the image data. In addition, the imaging controller 120 may be configured to receive radar data from the radars 116 and generate a radar point cloud, such as a 3D radar point cloud.

The one or more additional controllers 126 may include one or more of a speed controller, a track adjustment controller, a height adjustment controller, and a controller for facilitating one or more agricultural operations (e.g., a planting operation, a spreading operation, a spraying operation, a bailing operation, a cutting operation, a harvesting operation, or another operation).

In some embodiments, the GNSS 128 is in operable communication with a receiver 140. In some embodiments, the GNSS 128 includes a global positioning system (GPS) and the receiver 140 includes a GPS receiver. The receiver 140 may be configured for determining a position of the vehicle 100 during operation of the vehicle 100 (e.g., during traversal of the ground 102 with the vehicle 100 and/or during capturing of image data with the cameras 114 and capturing of radar data with the radars 116.

The IMU 130 may be operably coupled to the vehicle 100, such as to a chassis 142 of the vehicle 100. The computing device 118 may be in operable communication with and configured to receive data from the IMU 130. The IMU may be configured to measure one or more of a specific force, an angular rate, and an orientation of the vehicle 100 and may include at least one of each of an accelerometer, a gyroscope, and a magnetometer. The IMU 130 may be configured to facilitate determining one or more of a linear acceleration of the vehicle 100, a direction of travel of the vehicle 100, rotational rates and angular velocity, and a strength and direction of a magnetic field. In some embodiments, each of three mutually orthogonal axes (e.g., the pitch, roll, and yaw) of the vehicle 100 include an accelerometer, a gyroscope, and a magnetometer.

The I/O device 132 may include one or more devices configured to receiving a user input (e.g., from an operator) of the vehicle 100 and may include one or more of a keyboard, mouse, microphone, remote control device, button, joystick, trackball, touchpad, lightpen, a speaker, and display device. The I/O device 134 may be configured to receive a user input from the operator of the vehicle 100 and/or to provide one or more displays to the user.

The GSM 136 may include a digital mobile network and may facilitate digital communications between the vehicle 100 (e.g., the computing device 118, the imaging controller 120, and the one or more additional controllers 126).

In some embodiments, an object 144 (which may also be referred to as an "alignment object" or a "reference object") may be located on the vehicle 100 and may include a reference for alignment of data from the cameras 114 and the radars 116. In some embodiments, the object 144 is located on the ground 102. In other embodiments, the object 144 is fixedly coupled to the vehicle 100 and in the FOV of at least one camera 114 and at least one radar 116.

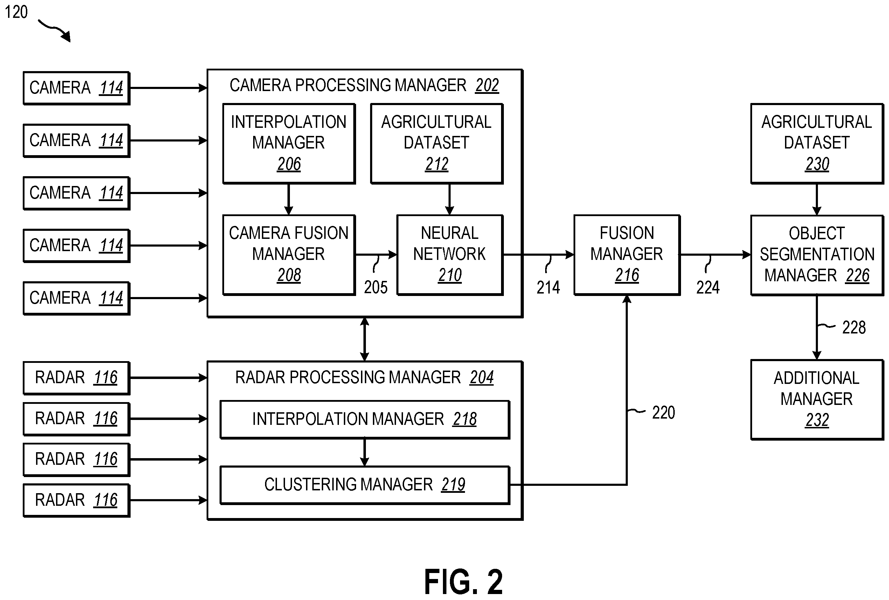

FIG. 2 is a simplified schematic of the imaging controller 120, in accordance with embodiments of the disclosure. The imaging controller 120 may include the camera processing manager 202 and the radar processing manager 204. The camera processing manager 202 may be configured to receive image data from one or more cameras 114. The radar processing manager 204 may be configured to receive radar data from one or more radars 116. In some embodiments, the camera processing manager 202 is in operable communication with the radar processing manager 204.

In use and operation, the cameras 114 receive image data and the radars 116 receive radar data as the vehicle 100 traverses a field. As described herein, the camera processing manager 202 of the computing device 118 may receive the image data and match the frame rate of the radar data to a scan rate of the radars 116. In some embodiments, the camera processing manager 202 processes and analyzes the image data from the cameras 114 and generates an image and/or a video based on the image data. In some embodiments, the camera processing manager 202 generates a virtual image and/or a virtual video based on the image data from multiple cameras 114, the virtual image having a FOV larger than the FOV of any of the individual cameras 114 from which the virtual image is created.

The radar processing manager 204 may receive radar data from the radars 116. In some embodiments, the radar processing manager 204 facilitates fusing radar data from multiple radars 116 and generation of a radar point cloud based on the radar data from multiple radars 116. The radar point cloud data and the processing image data may be fused, such as by one or more fusion algorithms. The fused data may be used in performing one or more control operations of the vehicle 100.

The cameras 114 may be in operable communication with the camera processing manager 202. The camera processing manager 202 may be configured to receive image data from the cameras 114. The camera processing manager 202 may further be configured to perform an object detection operation (e.g., an object detection and classification operation, an object tracking operation, an object segmentation operation), such as with one or more neural networks trained with an agricultural dataset for identifying agricultural objects. The camera processing manager 202 may include an interpolation manager 206, a camera fusion manager 208, a neural network 210 for object detection (e.g., also referred to as an object detection neural network), and an agricultural dataset 212.

The interpolation manager 206 may be configured to receive the image data from the cameras 114 and synchronize the camera data with the radar data. For example, a frame rate of the cameras 114 may be greater than a scan rate of the radars 116 and/or the frames of camera data may not be in sync (e.g., received at the same time) as the scans of the radars 116. In some embodiments, the image data from one or more (e.g., each) of the cameras 114 between radar scans may be interpolated using one or more advanced interpolation techniques, such as optical flow methods (e.g., the Lucas-Kanade method or Gunnar-Farneback) for computer vision, Kalman filtering, or deep neural network-based (DNN-based) trackers. In other words, the interpolation manager 206 may be configured to provide an estimate of the location of each object in the image data at times between image frames of the camera data to correspond to the radar data and the scan rate of the radar(s) 116. Accordingly, the interpolation manager 206 may facilitate use of image data with cameras 114 having a frame rate less than the scan rate of the radars 116, effectively increasing the frame rate of the cameras 114 to match the scan rate of the radars 116. In some embodiments, the output of the interpolation manager 206 is image data having a frame rate corresponding to the scan rate of the radars 116, each frame corresponding in time to a scan of the radars 116. In other embodiments, the frame rate of the cameras 114 is substantially the same as the scan rate of the radars 116 and the camera processing manager 202 does not include the interpolation manager 206.

In other embodiments, the frame rate of the camera 114 is faster than the scan rate of the radars 116. In some such embodiments, the image data from the cameras 114 may not be interpolated with the interpolation manager 206, may be interpolated to match the scan rate of the radars 116, or the radar data may be interpolated to match the frame rate of the cameras 114, as described in further detail below.

The camera fusion manager 208 may receive the image data (e.g., directly from the cameras 114 or from the interpolation system 206) and may combine (e.g., fuse) the image data to generate combined image data 205 (also referred to herein as a "virtual camera data" or "virtual image data"). In some embodiments, a FOV of the combined image data 205 corresponds to the FOV of each radar 116. In some embodiments, the camera processing manager 202 generates sets of combined image data 205, each set of combined image data 205 having a FOV corresponding to a FOV of one of the radars 116. In some such embodiments, the camera processing manager 202 generates a same number of sets of combined image data 205 as a number of radars 116. In other embodiments, the combined image data 205 exhibits a 360° view around the vehicle 100 and the image data from each of the cameras 114 is combined to form a single set of combined image data 205 corresponding to a surround view of the vehicle 100.

The camera fusion manager 208 may be configured to perform one or more sensor fusion operations on the image data (e.g., the image data from each camera 114 and/or the combined image data 205). The sensor fusion operation may include a Kalman filter operation (e.g., an optimal Kalman filter and an extended Kalman filter (EKF)), or another sensor fusion operation. In some embodiments, fusing the image data from multiple cameras 114 may reduce the so-called parallax effect, wherein the background and the foreground of an image or video appear to move at different speeds.

The camera fusion manager 208 may be substantially similar to the system described in GB 2305023.0, "Camera System and Method for Generating a Combined Image Projection," filed April 4, 2023, the disclosure of which is incorporated in its entirety herein. For example, the camera fusion manager 208 may be configured to stitch image data from each camera 114 to generate one or more sets of combined image data 205 based on the image data from each of the cameras 114. By way of non-limiting example, the combined image data 205 may be generated by capturing image data with each camera 114; determining the orientation of the image data from each camera 114 relative to the orientation of the image data from at least another camera 114; generating an image projection based on the image data from each camera 114; determining common image content in the image projections from each camera 114 to form a combined image projection; aligning the image data from each camera 114; overlapping the image data from each camera 114 by overlapping common image content; determining a resolution value for each of the overlapping pixels; selecting pixels in the common image content based on the resolution values of the pixels; and combining the image data from each camera to form combined image data based at least in part on the resolution values of the pixels of the common image content. The position of the cameras 114 may be calibrated relative to a reference marker and/or relative to one another, as described in the above-referenced application. Accordingly, the camera fusion manager 208 may stitch the image data from each of the cameras 114 to generate the combined image data 205. In some embodiments, each set of combined image data 205 individually corresponds to a FOV of one of the radars 116. In other embodiments, the combined image data 205 includes a 360° surround view of the vehicle 100.

The combined image data 205 may be received by the neural network 210 (also referred to herein as an "object detection neural network"). The neural network 210 may be trained with the agricultural dataset 212. The agricultural dataset 212 may include ground truth data with respect to agricultural objects and/or animals that may be encountered in a field during performance of one or more agricultural operations (e.g., during one or more of baling, planting, spraying, spreading, harvesting, cutting, swathing, tilling). The agricultural objects may include moving objects (e.g., one or more a tractor, implement (tillage implement), combine, forager, combine header, combine trailer, forage header, front loader, planter and seeder, harrow, plough, swather, tedder, rake, mower, fertilizer spreader, sprayer, potato digger), a static object (e.g., one or more of a bale (a square bale, a round bale), a stack of crops, a pole (e.g., a fence pole, a utility pole, an electric pole) a windturbine, a rock (e.g., a boulder, a stone), vegetation (e.g., trees, weeds, bushes), and a building (e.g., farm, house, barn, shed, silo). The objects may include be living objects, such as humans (e.g., adult, infant, toddler, child, adolescent, adult), and animals (e.g., fawn, bird, cat, dog, cow, sheep, horse, fox, rabbit, deer, pig, goat). The agricultural dataset 212 may include ground truth for classifying each of the agricultural objects, whether moving, static, and/or living.

The agricultural dataset 212 may include ground truths for agricultural objects found in agricultural environments. In addition, the agricultural dataset 212 may include training data and associations for agricultural objects. By way of non-limiting example, the agricultural dataset 212 may include associations between towed implements (e.g., planters, tillage implements) and self-propelled vehicles (e.g., a tractor) that tow the towed implements; animals and associated movements, poses, and speeds; whether one object is trailing another, such as in a leader-follower arrangement, and trajectories conventionally encountered by the agricultural objects.

The neural network 210 may include a deep neural network (DNN), such as a deep convolutional neural network. The neural network 210 may include one or more object detection algorithms, object tracking algorithms, and/or object detection and tracking algorithms, such as one or more of You Only Look Once (YOLO) algorithms (e.g., YOLOv3, YOLOv5, YOLOv8), Faster R-CNN, Simple Online and Realtime Tracking (SORT), DeepSORT, FairMOT, TransMOT, ByteTrack, or another object detection and object tracking neural network. Of course, the neural network 210 may include one or more other object detection and tracking algorithms and/or separate algorithms for object detection and object tracking. In some embodiments, the neural network 210 generates a bounding box around the detected objects and classifies one or more (e.g., each) objects in the combined image data 205.

Responsive to identifying the objects and tracking the objects with the neural network 210, the neural network 210 may generate labeled image data 214 (also referred to as "classified image data") including object labels (e.g., object classifications) for each of the identified (e.g., detected) objects in the combined image data 205. The labeled image data 214 may include pixels of image data, each pixel defined by color data (e.g., RGB color data), SWIR data, NIR data, LWIR data, a timestamp, and an object label. In some embodiments, the pixels of the image data (e.g., pixels defining labeled objects) includes coordinate data (e.g., location data). In some embodiments, the labeled image data 214 further includes segmentation data (e.g., whether the object is an instance of a particular type of object and a number of instances of the object, semantic segmentation data, panoptic segmentation data). The labeled image data 214 may be received by a data fusion manager 216 (also referred to as a "fusion node").

With continued reference to FIG. 2, the radar processing manager 204 receives the radar data from one or more of the radars 116. The radar processing manager 204 may include an interpolation manager 218 configured to receive the radar data from the radars 116 and synchronize the radar data with the camera data. For example, a scan rate of the radars 116 may be less than a frame rate of the cameras 114, may be greater than the frame rate of the cameras 114, and/or the scan rate of the radars 116 may not be the same as the frame rate of the cameras 114. The radar data from one or more (e.g., each) of the radars 116 may be interpolated to sync the radar data with the camera data, as described above with reference to the camera data. In some embodiments, only one of the camera processing manager 202 and the radar processing manager 204 includes an interpolation manager 206, 218. The other of the camera processing manager 202 and the radar processing manager 204 may not include an interpolation manager 206, 218.

In some embodiments, the radar processing manager 204 analyzes the radar data from each radar 116 individually to generate a 3D radar point cloud 220 for each radar 116. In some such embodiments, the FOV of each 3D radar point cloud 220 corresponds to the FOV of one of the sets of combined image data 205. In other embodiments, the radar data from each radar 116 is fused (e.g., such as with a sensor fusion tracking algorithm) and the 3D point cloud 220 includes a 360° view surrounding the vehicle 100. In some such embodiments, the radar processing manager 204 includes a radar fusion manager and the FOV of the combined image data 205 corresponds to the FOV of the combined 3D radar point cloud 220.

In some embodiments, the radar processing manager 204 includes a clustering manager 219 configured to cluster the radar data into clusters. For example, the clustering manager 219 may be configured to perform a hierarchical clustering operation on the radar data to generate the 3D radar point cloud 220 including clustered radar data. Clustering of the radar data may facilitate alignment of the radar data (the 3D radar point cloud 220) with the image data prior to fusion of the combined image data 205 and the 3D radar point cloud 220.

In some embodiments, such as embodiments including multiple radars 116, the radar processing manager 204 is configured to receive the radar data from each radar 116 (e.g., the radar point cloud from each radar 116) and perform a fusion operation (e.g., a sensor fusion tracking operation (e.g., with one or more sensor fusion tracking algorithms) to generate a radar point cloud based on the fields of view of the multiple radars 116. In some such embodiments, the 3D radar point cloud 220 has a 360° FOV.

The 3D radar point cloud 220 may be received by the data fusion manager 216. As described above, the combined image data 205 may also be received by the fusion manager 216. The fusion manager 216 may be configured to fuse the combined image data 205 and the 3D radar point cloud 220 to generate fused data 224 including the combined image data 205 from the cameras 114 and the 3D radar point cloud 220 from the radars 116.

The fusion manager 216 may be configured to project the 3D point cloud 220 onto the combined image data 205, such that the fused data 224 includes the combined image data 205 and the data from the 3D point cloud 220 in 2D space. In other words, in some such embodiments, the fusion of the 3D radar point cloud 220 and the combined image data 205 occurs in 2D and the 3D radar point cloud 220 is transposed into the combined image data 205 and points in the 3D radar point cloud 220 are matched to bounding boxes of objects in the combined image data 205. In some embodiments, the 3D radar point cloud 220 includes more sparse data compared to the combined image data 205. In some such embodiments, since the data fusion occurs in 2D, the data fusion may use less processing power and may process the data faster compared to other embodiments. By way of comparison, performing object detection on the 3D point cloud 220 and labeling the 3D point cloud 220 rather than the combined image data 205 (in 2D) may utilize more processing power compared to labeling the combined image data 205.

Projecting the 3D point cloud 220 onto the combined image data 205 may include formatting and aligning the 3D point cloud 220 data with the combined image data 205, such as by aligning the timestamps of the 3D point cloud 220 data and the combined image data 205, applying extrinsic parameters (e.g., describing the position and orientation) of each of the radars 116 to each point in the 3D point cloud 220 to transform the 3D points of the 3D radar point cloud 220 into the 2D coordinate system of the combined image data 205; projecting the transformed 3D points of the 3D radar point cloud 220 to the image plane of the 2D plane of the combined image data 205 by applying intrinsic parameters of the cameras 114 (e.g., describing the focal length, principal point, and distortion coefficients of each camera 114); and overlaying the radar point cloud 220 with the combined image data 205. In some embodiments, the fused data 224 includes the image data and the data from the 3D radar point cloud 220. Stated another way, each pixel of the fused data 224 may include the data from the combined image data 205 and the 3D radar point cloud 220. By way of non-limiting example, each pixel of the fused data 224 may include data from the combined image data (e.g., RGB color data, SWIR data, NIR data, LWIR data, a timestamp, and an object label) and data from the radar point cloud 220 (e.g., distance, depth, velocity, azimuth angle, and elevational angle data).

In some embodiments, the fused data 224 includes and corresponds to pixels of objects in the combined image data 205. In other words, pixels that do not include an object classification are not included in the fused data 224. Stated another way, pixels of the background (not including objects) may be disregarded and may not be included in the fused data 24. By way of non-limiting example, radar data from the 3D radar point cloud 220 may be projected to the combined image data 205 and only pixels of the fused data 224 corresponding to the objects identified and classified in the combined image data 205 may be included in the fused data 224. In other words, in some such embodiments, the fused data 224 may include only pixels corresponding to bounding boxes of identified objects in the combined image data 205 and the corresponding data from the 3D radar point cloud 220.

While the fused data 224 has been described as including the 3D radar point cloud 220 projected onto the combined image data 205, the disclosure is not so limited. In other embodiments, the fused data 224 includes the combined image data 205 projected onto the 3D radar point cloud 220 and the fusion manager 216 is configured to project the combined image data 205 to the 3D radar point cloud 220. By way of non-limiting example, bounding boxes of identified (and labeled) objects in the combined image data 205 may be projected (e.g., the corners of the bounding boxes may be projected) to obtain points in 3D space (referred to as "back projection") which define the vertices of a 3D frustum in the 3D (real world) coordinate system, corresponding to the 3D radar point could 220. In some embodiments, the 3D frustum may be defined based on the camera 114 parameters (e.g., the intrinsic and extrinsic parameters (e.g., the rotation and translation between the camera 114 and the world coordinates)). Each frustum corresponds to an object detected in the combined image data 205. The points inside each frustum may be analyzed to create smaller pieces of the point cloud, each piece containing 3D points corresponding to an object detected in the 2D image. However, the disclosure is not so limited and the combined image data 205 may be transposed to the 3D space of the 3D radar point cloud 218 by other methods.

The fusion manager 216 may be configured to perform one or more fusion operations on the combined 3D radar point cloud 220 and the combined image data 205 to generate the fused data 224. By way of non-limiting example, the fusion manager 216 may be configured to perform one or more of a Hungarian algorithm (also referred to as "Kuhns-Munkres algorithm" and implementing bipartite graph theory), a Bayesian estimation (Bayesian analysis (e.g., Bayes' theorem)) for sensor fusion, a Kalman filter, and Bipartite Graph Matching operation to match the radar data (e.g., the 3D radar point cloud 220) with the image data (e.g., the combined image data 205). However, the disclosure is not so limited, and the fusion manager 216 may perform the fusion operation by other methods to generate the fused data 224.

With continued reference to FIG. 2, the fused data 224 may be received by an object segmentation manager 226 configured to generate segmented data 228. The object segmentation manager 226 may be configured to perform one or more object segmentation operations on the fused data 224, which may be in 2D (e.g., when the 3D radar point cloud 220 is projected onto the combined image data 205) or in 3D (e.g., when the combined image data 205 is projected onto the 3D radar point cloud 220). In some embodiments, the object segmentation operation is performed in 2D, which may increase the processing time of the object segmentation operation and the imaging controller 120. When the segmentation is performed in 3D, the segmentation may be referred to as a point cloud segmentation operation.

The object segmentation manager 226 may be configured to perform one or more of a semantic segmentation operation (e.g., to segment the fused data into segments based on classes), an instance segmentation operation (e.g., to detect instances of individual objects and provide separate labels to the instances of the individual objects regardless of whether the objects are of the same class of object (e.g., separate tractors may be provided as separate instances; separate animals may be labeled as separate instances)), and a panoptic segmentation operation (e.g., a combination of an instance segmentation operation and a semantic segmentation operation). In some embodiments, the object segmentation manager 226 performs an instance segmentation operation.

In some embodiments, the object segmentation manager 226 is configured to perform an instance segmentation operation on the fused data 224. In some embodiments, the object segmentation manager 226 includes a trained neural network trained to segment the fused data including the data from the 3D radar point cloud 220 and the combined image data 205. The object segmentation manager 226 may be trained with an additional agricultural dataset 230 including ground truth data for fused data. In some embodiments, the additional agricultural dataset 230 is different than the agricultural dataset 212 because the additional agricultural dataset 230 includes data from the 3D radar point cloud 220 in addition to the combined image data 205.

After performing the object segmentation operation with the object segmentation manager 226 to generate the segmented data 228, the object segmentation manager 226 may provide the segmented data 228 to an additional manager 232 for further processing. For example, the imaging system 120 may provide the segmented data 228 to the one or more additional controllers 126 (FIG. 1) to facilitate control of one or more operations of the vehicle 100. By way of non-limiting example, based on the segmented data 228 received by the one or more additional controllers 126, the vehicle 100 may be navigated by the one or more additional controllers 126 (e.g., by controlling one or more of the propulsion system, the steering system, the braking system, and the navigation system).

In some embodiments, responsive to receiving the segmented data 228, the one or more additional controllers 126 may perform an object avoidance operation to avoid one or more of the instances of objects in the segmented data 228. In some embodiments, the segmented data 228 is received by the I/O device 132 and displayed on a display of the I/O device 132. The operator of the vehicle 100 may view the displayed segmented data 228 to facilitate navigation of the vehicle 100 using real-time data.

In some embodiments, the computing device 118 provides the segmented data 228 to a server (e.g., a remote server), where the segmented data 228 may be used for remote planning operations. For example, the segmented data 228 may include identification of objects (e.g., locations, such as GPS coordinates) present in a field. The objects may include one or more static objects, such as one or more of windmills, rocks, boulders, obstructions in the field, buildings, trees, and other objects. In some embodiments, the objects include plants, and may include a status of crops (e.g., a stage of growth of the crops) and may be analyzed remotely to predict a time when the crops should be harvested.

The imaging controller 120 may facilitate safe operation of the vehicle 100. In some embodiments, the imaging controller 120 facilitates autonomous operation of the vehicle 100 (e.g., for obstacle avoidance), assisted operation by relaying the segmented data 228 to a display (e.g., to the I/O device 132, such as to a display of the I/O device 132), or remote planning for future operations.

While the imaging system 120 has been described and illustrated as including the object segmentation manager 226 after the fusion manager 216, the disclosure is not so limited. In other words, in some embodiments, the object segmentation operation may not be performed on the fused data 224.

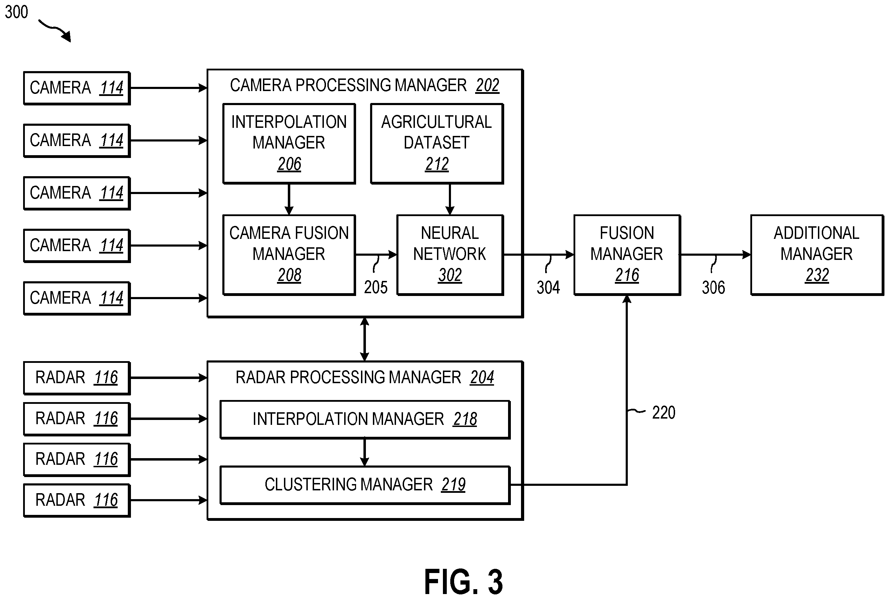

FIG. 3 is a simplified schematic of an imaging controller 300, in accordance with embodiments of the disclosure. The imaging controller 300 may be substantially similar to the imaging controller 120 of FIG. 2, except that the camera processing manager 202 includes a neural network 302 (also referred to as an "object detection and object segmentation neural network") configured to perform one or more of object detection operations, object tracking operations, and object segmentation operations to generate segmented data 304. In some such embodiments, the imaging controller 300 may not include an object segmentation manager (e.g., the object segmentation manager 226) configured to receive fused data 224 (FIG. 2).

The neural network 302 may be configured to perform one or more segmentation operations on the combined image data 205 to generate the segmented data 304. The segmented data 304 may be received by the fusion manager 216, which may also receive the 3D radar point cloud 220 and fuse the segmented data 304 with the 3D radar point cloud 220 to generate fused data 306. The segmented data 304 may include only the image data from the cameras 114. In some such embodiments, the object segmentation operation may be performed on the image data and not on the fused data 306.

The fused data 306 may be received by the additional manager 232 to determine one or more operations of the vehicle 100, as described above with reference to FIG. 2. Accordingly, with reference to FIG. 2 and FIG. 3, the object segmentation operation may be performed either on the fused data 224 (FIG. 2), or on the segmented data 304 (FIG. 3).

While the imaging system 120 and the vehicle 100 have been described as including five cameras 114 and four radars 116, the disclosure is not so limited. in other embodiments, the imaging system 120 and the vehicle 100 include only a single camera 114 and a single radar 116. For example, the imaging system 120 may include a camera 114 and a radar 116 operably coupled to the vehicle 100, such as proximate an upper portion of the operator cabin 106 or proximate a front of the vehicle 100 (e.g., in front of the engine compartment 108).

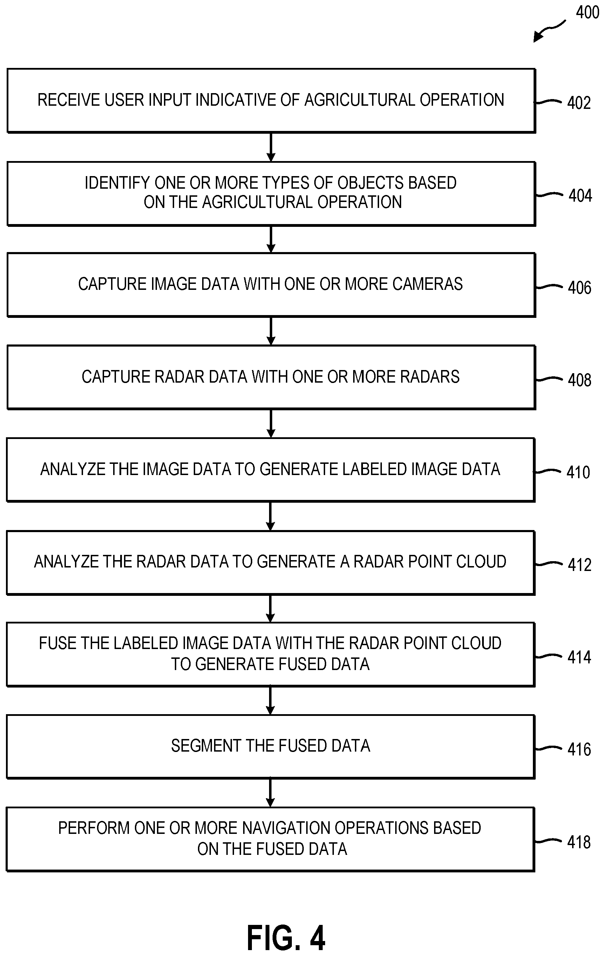

FIG. 4 is a simplified flow chart illustrating a method 400 of navigating a vehicle, according to one or more embodiments of the disclosure. The method 400 includes receiving a user input indicative of an agricultural operation to be performed, as shown in act 402. The agricultural operation may include, for example, one or more of a baling, planting, spraying, spreading, harvesting, cutting, swathing, tilling operation.

Responsive to receiving the user input indicative of the agricultural operation. the method 400 may include identifying one or more types of objects that may be present (e.g., proximate the vehicle) based on the selected agricultural operation, as shown in act 404. For example, responsive to receiving a selection of a planting operation in act 402, act 404 may include determining that objects that may be encountered include a planter (e.g., a towed implement including row units), a tractor, associations between objects (e.g., between a towed implement and the tractor), static objects (e.g., rocks, boulders, utility poles, windmills), animals, and humans. In some embodiments, each agricultural operation may include a unique list of objects that may be detected and may include a unique neural network trained with a unique set of agricultural data.

The method 400 may further include capturing image data with one or more cameras (e.g., cameras 114 (FIG. 1)), as shown in act 406. Capturing the image data may include capturing the image data while operating (e.g., driving) the vehicle. The image data may include one or more of RGB image data, SWIR data, NIR data, and LWIR data. The image data may also include a timestamp. In some embodiments, the pixels of the image data includes coordinate information.

The method 400 may further include capturing radar data with one or more radars (e.g., radars 116 (FIG. 1)), as shown in act 408. Capturing the radar data may include capturing the radar data while operating (e.g., driving) the vehicle. The radar data may include one or more of a pitch and return of radar scans (pulses), azimuthal data, distance (depth) data, velocity data, and a point cloud. In some embodiments, the radar data is capturing substantially simultaneously with capturing of the image data.

Responsive to capturing the image data, the method 400 includes analyzing the image data to generate labeled image data, as shown in act 410. Analyzing the image data may include combining the image data to generated combined image data having a FOV corresponding to a FOV of one of the radars, as described above with reference to the combined image data 205 (FIG. 2, FIG. 3).

Analyzing the image data may further include performing one or more object detection operations, object tracking operations, and object detection and tracking operations on the image data. Analyzing the image data may include labeling objects identified in the image data. In some embodiments, analyzing the image data may include analyzing the image data with one or more neural networks (e.g., one or more deep neural networks) trained with agricultural data specific to an agricultural environment. The neural network may be selected during act 404, as described above. In some embodiments, analyzing the image data may include performing an object segmentation operation (e.g., an instance segmentation operation) on the image data, as described above with reference to FIG. 3. In some such embodiments, analyzing the image data includes generating segmented data.

In some embodiments, analyzing the image data includes synchronizing the image data with the radar data such that the image data matches the radar data (e.g., such that the frame rate of the image data matches the scan rate of the radar data).

The method 400 may further include analyzing the radar data to obtain a radar point cloud (e.g., the 3D radar point cloud 220), as shown in act 412. In some embodiments, the radar data is provided from the radars as a radar point cloud. In other embodiments, the radar data is processed to covert the radar data to a radar point cloud. In some embodiments, analyzing the radar data includes synchronizing the radar data with the image data such that the radar data matches the image data (e.g., such that the scan rate of the radar data matches the frame rate of the image data).

Responsive to analyzing the image data and analyzing the radar data, the method 400 includes fusing the labeled image data with the radar point cloud, as shown in act 414. Fusing the labeled image data with the radar point cloud may include performing one or more fusion operations on the fused data, as described above with reference to the fusion manager 216 (FIG. 2, FIG. 3).

Responsive to generating the fused data, the method 400 may further include segmenting the fused data, as shown in act 416. Segmenting the fused data may be substantially similar to that described above with reference to FIG. 2 and generation of the segmented data 228.

The method 400 may further include performing one or more navigation operations based on the fused data, as shown at act 418. The one or more navigation operations may include controlling one or more of a propulsion system of the vehicle, the braking system of the vehicle, the steering of the vehicle, and a route of the vehicle. By way of non-limiting example, responsive to identifying an animal in the fused data, act 418 may include reducing a speed of the vehicle below a threshold (e.g., below about 8 kilometers per hour (about 5 miles per hour)). Responsive to identifying a human in the fused data, act 418 may include stopping the vehicle until the human has moved out of the path of the vehicle.

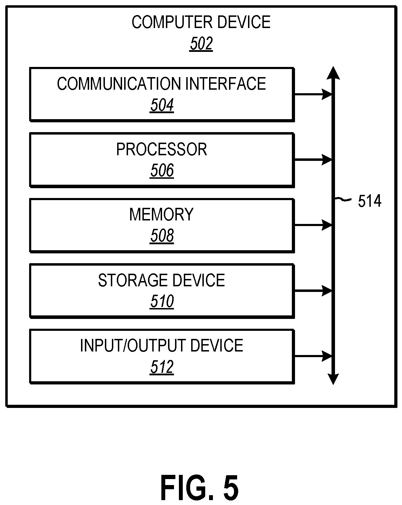

FIG. 5 is a schematic view of a computer device 502, in accordance with embodiments of the disclosure. The computer device 502 may correspond to the computing device 118 (FIG. 1). The computer device 502 may include a communication interface 504, at least one processor 506, a memory 508, a storage device 510, an input/output device 512, and a bus 514. The computer device 502 may be used to implement various functions, operations, acts, processes, and/or methods disclosed herein, such as the method 400.

The communication interface 504 may include hardware, software, or both. The communication interface 504 may provide one or more interfaces for communication (such as, for example, packet-based communication) between the computer device 502 and one or more other computing devices or networks (e.g., a server). As an example, and not by way of limitation, the communication interface 504 may include a network interface controller (NIC) or network adapter for communicating with an Ethernet or other wire-based network or a wireless NIC (WNIC) or wireless adapter for communicating with a wireless network, such as a Wi-Fi.

The at least one processor 506 may include hardware for executing instructions, such as those making up a computer program. By way of non-limiting example, to execute instructions, the at least one processor 506 may retrieve (or fetch) the instructions from an internal register, an internal cache, the memory 508, or the storage device 510 and decode and execute them to execute instructions. In some embodiments, the at least one processor 506 includes one or more internal caches for data, instructions, or addresses. The at least one processor 506 may include one or more instruction caches, one or more data caches, and one or more translation look aside buffers (TLBs). Instructions in the instruction caches may be copies of instructions in the memory 508 or the storage device 510.

The memory 508 may be coupled to the at least one processor 506. The memory 508 may be used for storing data, metadata, and programs for execution by the processor(s). The memory 508 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 508 may be internal or distributed memory.

The storage device 510 may include storage for storing data or instructions. As an example, and not by way of limitation, storage device 510 may include a non-transitory storage medium described above. The storage device 510 may include a hard disk drive (HDD), Flash memory, an optical disc, a magneto-optical disc, magnetic tape, or a Universal Serial Bus (USB) drive or a combination of two or more of these. The storage device 510 may include removable or non-removable (or fixed) media, where appropriate. The storage device 510 may be internal or external to the storage device 510. In one or more embodiments, the storage device 510 is non-volatile, solid-state memory. In other embodiments, the storage device 510 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 510 may include machine-executable code stored thereon. The storage device 510 may include, for example, a non-transitory computer-readable storage medium. The machine-executable code includes information describing functional elements that may be implemented by (e.g., performed by) the at least one processor 506. The at least one processor 506 is adapted to implement (e.g., perform) the functional elements described by the machine-executable code. In some embodiments the at least one processor 506 may be configured to perform the functional elements described by the machine-executable code sequentially, concurrently (e.g., on one or more different hardware platforms), or in one or more parallel process streams.

When implemented by the at least one processor 506, the machine-executable code is configured to adapt the at least one processor 506 to perform operations of embodiments disclosed herein. For example, the machine-executable code may be configured to adapt the at least one processor 506 to perform at least a portion or a totality of the method 400 of FIG. 4. As another example, the machine-executable code may be configured to adapt the at least one processor 506 to perform at least a portion or a totality of the operations discussed for the vehicle 100 of FIG. 1. As a specific, non-limiting example, the machine-executable code may be configured to adapt the at least one processor 506 to cause the I/O device 132 of the vehicle 100 to display surroundings of the vehicle 100 including labeled instances of objects surrounding the vehicle, as described above with reference to the imaging controller 120 of FIG. 2 and FIG. 3, and the method 400 of FIG. 4. In another non-limiting example, the machine-executable code may be configured to adapt the at least one processor 506 to cause the vehicle 100 to perform at least one navigation operation, as described above with reference to the method 400 of FIG. 4.

The input/output device 512 may allow an operator of the vehicle 100 to provide input to, receive output from, the computer device 502. The input/output device 512 may include a mouse, a keypad or a keyboard, a joystick, a touch screen, a camera, an optical scanner, network interface, modem, other known I/O devices, or a combination of such I/O interfaces.

In some embodiments, the bus 514 *(e.g.,* a Controller Area Network (CAN) bus, an ISOBUS (ISO 11783 Compliant Implement Control)) may include hardware, software, or both that couples components of computer device 502 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural vehicle, comprising:
cameras operably coupled to the agricultural vehicle;
radars operably coupled to the agricultural vehicle; and
an imaging controller operably coupled to the radars and the cameras, the imaging controller comprising:
at least one processor; and
at least one non-transitory computer-readable storage medium having instructions thereon that, when executed by the at least one processor, cause the imaging controller to:
receive image data from the cameras;
receive radar data from the radars;
combine the image data from a first camera with the image data from a second camera having a different field of view than the first camera to generate combined image data; and
fuse the combined image data with the radar data to generate fused data.

2. The agricultural vehicle of claim 1, wherein the imaging controller comprises instructions thereon that, when executed by the at least one processor, cause the imaging controller to perform object detection on the combined image data using a neural network trained with an agricultural object dataset before fusing the combined image data with the radar data.

3. The agricultural vehicle of claim 1 or claim 2, wherein the imaging controller comprises instructions thereon that, when executed by the at least one processor, cause the imaging controller to identify instances of objects in the fused data.

4. The agricultural vehicle of any one of claims 1 through 3, wherein the imaging controller comprises instructions thereon that, when executed by the at least one processor, cause the imaging controller to display an image of the fused data on a user interface.

5. The agricultural vehicle of any one of claims 1 through 4, wherein the imaging controller comprises instructions thereon that, when executed by the at least one processor, cause the imaging controller to fuse the combined image data with the radar data by projecting the radar data to the combined image data.

6. The agricultural vehicle of any one of claims 1 through 4, wherein the imaging controller comprises instructions thereon that, when executed by the at least one processor, cause the imaging controller to fuse the combined image data with the radar data by projecting the combined image data onto the radar data.

7. The agricultural vehicle of any one of claims 1 through 6, wherein the imaging controller comprises instructions thereon that, when executed by the at least one processor, cause the imaging controller to:
label objects in the fused data; and
provide the fused data including the labeled objects to a remote location.

8. The agricultural vehicle of any one of claims 1 through 7, wherein the imaging controller comprises instructions thereon that, when executed by the at least one processor, cause the imaging controller to control a navigation operation of the agricultural vehicle.

9. The agricultural vehicle of any one of claims 1 through 8, wherein the imaging controller comprises instructions thereon that, when executed by the at least one processor, cause the imaging controller to use a neural network to receive the combined image data and label objects in the combined image data based on an agricultural dataset comprising ground truths for agricultural objects.

10. The agricultural vehicle of any one of claims 1 through 9, wherein the imaging controller comprises instructions thereon that, when executed by the at least one processor, cause the imaging controller to generate the combined image data having a same field of view as one of the radars.

11. The agricultural vehicle of any one of claims 1 through 10, wherein the imaging controller comprises instructions thereon that, when executed by the at least one processor, cause the imaging controller to generate the combined image data having a 360° field of view.

12. The agricultural vehicle of any one of claims 1 through 11, further comprising at least one of a global navigation satellite system and an inertial measurement unit operably coupled to the agricultural vehicle.

13. An agricultural vehicle, comprising:
a propulsion system;
wheels operably coupled to a chassis;
cameras operably coupled to the agricultural vehicle; and
an imaging controller operably coupled to the cameras, the imaging controller comprising:
at least one processor; and
at least one non-transitory computer-readable storage medium having instructions thereon that, when executed by the at least one processor, cause the imaging controller to:
receive image data from the cameras;
generate combined image data comprising the image data from each camera, the combined image data having a field of view of 360°; and
classify objects in the combined image data using a neural network trained to identify agricultural objects.

14. The agricultural vehicle of claim 13, further comprising radars operably coupled to the agricultural vehicle.

15. The agricultural vehicle of claim 14, wherein the imaging controller comprises instructions thereon that, when executed by the at least one processor, cause the imaging controller to:
receive 3D radar point cloud data from the radars;
fuse the 3D radar point cloud data with the combined image data to generate fused data; and
perform an instance segmentation operation on the fused data.

16. The agricultural vehicle of claim 15, wherein the imaging controller comprises instructions thereon that, when executed by the at least one processor, cause the imaging controller to perform at least one navigation operation based on the fused data.

17. A method of operating an agricultural vehicle, the method comprising:
receiving image data from cameras operably coupled to the agricultural vehicle;
receiving radar data from radars operably coupled to the agricultural vehicle;
combining image data from two or more cameras to create combined image data having a field of view corresponding to a field of view of at least one of the radars;
fusing the radar data with the combined image data to form fused data; and
controlling one or more operations of the agricultural vehicle based on the fused data.

18. The method of claim 17, further comprising segmenting the fused data and identifying instances of agricultural objects in the fused data.

19. The method of claim 17 or claim 18, further comprising classifying objects in the combined image data using a neural network trained with a dataset comprising ground truths for agricultural objects.

20. The method of any one of claims 17 through 19, further comprising interpolating one of the image data and the radar data to correspond in time to the other of the image data and the radar data.
